Europäisches Patentamt

European Patent Office

Office européen des brevets

(19)

(11) Numéro de publication: **0 038 769**
**B1**

(12) ## FASCICULE DE BREVET EUROPEEN

(45) Date de publication du fascicule du brevet:
24.07.85

(51) Int. Cl.⁴: **F 03 G 7/00,** F 25 B 27/00,
F 24 J 2/04

(21) Numéro de dépôt: **81430008.3**

(22) Date de dépôt: **15.04.81**

(54) Procédé et dispositifs pour faire circuler un fluide caloporteur dans un circuit fermé comportant une source chaude et une source froide.

(30) Priorité: **18.04.80 FR 8008847**

(43) Date de publication de la demande:
**28.10.81 Bulletin 81/43**

(45) Mention de la délivrance du brevet:
**24.07.85 Bulletin 85/30**

(84) Etats contractants désignés:
**BE CH DE FR GB IT LI**

(56) Documents cités:
**DE - A - 2 756 585**
**FR - A - 1 001 963**
**FR - A - 2 008 157**
**FR - A - 2 380 448**
**GB - A - 995 128**
**US - A - 1 886 243**
**US - A - 2 068 549**
**US - A - 2 195 293**
**US - A - 2 210 511**
**US - A - 2 210 607**
**US - A - 2 226 797**
**US - A - 2 230 917**
**US - A - 4 061 131**
**US - A - 4 148 195**
**US - A - 4 241 784**

(73) Titulaire: **Bernier, Jean-Paul, Route de la Sainte Baume Quartier de Vède, F-13390 Auriol (FR)**

(72) Inventeur: **Bernier, Jean-Paul, Route de la Sainte Baume Quartier de Vède, F-13390 Auriol (FR)**

(74) Mandataire: **Azais, Henri et al, c/o CABINET BEAU DE LOMENIE 14, rue Raphael, F-13008 Marseille (FR)**

ACTORUM AG

## Description

La présente invention a pour objet un procédé et des dispositifs du type pompe thermique pour faire circuler un fluide caloporteur entre une source chaude et une source froide, éloignées et reliées par un circuit fermé à volume constant, afin d'assurer un échange thermique entre la source chaude et la source froide.

Contrairement aux machines thermodynamiques connues, une pompe thermique selon l'invention ne fournit aucun travail au milieu extérieur et a donc un rendement nul. De ce fait, en application du principe de CARNOT, une pompe thermique selon l'invention peut faire circuler un fluide caloporteur entre une source chaude et une source froide dont l'écart de température est faible.

On connaît des thermopompes ou des thermocompresseurs, par exemple ceux qui sont décrits dans les brevets ci-après, FR-A-1 464 982 (Conduction Corporation, US-A-4 036 019, 4 135 366, 4 180 982 et FR-A-2 268 946 (I. Siégel), US-A-3 407 626 (R. Turnblade), US-A-3 648 458 (R. Mc Alister), US-A-3 053 198 (H. Staehle), US-A-2 688 923 (F. Bonaventura), DE-A-2 617 025 (Dornier).

Dans ces machines thermodynamiques connues, on s'efforce de minimiser les échanges de chaleur entre la source chaude et le fluide à pomper ou à comprimer de façon à conserver un écart de température important entre la source chaude et la source froide pour obtenir un bon rendement.

Le brevet GB-A-995 128 (The English Electric Company) décrit un dispositif pour faire circuler un fluide de refroidissement dans un circuit fermé. Le dispositif comporte un appareil à refroidir qui fait fonction de source chaude qui vaporise le liquide à l'état de vapeur sèche et un condenseur qui fait fonction de source froide dans lequel le liquide condense. Le condensat s'écoule par gravité dans un premier réservoir et de là il s'écoule par gravité vers un deuxième réservoir où il est chauffé par des échangeurs dans lesquels circule la vapeur sèche. Une vanne à flotteur permet de maintenir le fluide en pression dans le deuxième réservoir et la pression chasse le liquide vers la source chaude. Les calories sont prélevées à la source chaude et transmises à la source froide sous forme de chaleur latente de vaporisation.

Le brevet US-A-2 210 511 (R. Taylor) décrit un dispositif de transfert de chaleur entre un vaporisateur et un condenseur qui comporte un réservoir inférieur muni d'une vanne commandée par un flotteur coulissant et un réservoir supérieur qui est au même niveau que l'évaporateur. Le liquide passe du deuxième réservoir à l'évaporateur par gravité. Il se vaporise. Dans une première phase la vapeur va au condenseur en passant par le deuxième réservoir et le condensat s'écoule par gravité dans le réservoir inférieur. Lorsque celui-ci est plein la vanne est fermée par le flotteur, la pression dans le deuxième réservoir monte et le liquide est chassé vers le premier réservoir. Le transfert de chaleur entre la source chaude et la source froide est réalisé sous forme de chaleur latente de vaporisation.

Dans les dispositifs selon l'invention le fluide caloporteur, qui circule entre la source chaude et la source froide, est un liquide ce qui permet de transporter un maximum de calories pour un écart de température entre les deux sources relativement faible.

L'objectif de la présente invention est de faire circuler un fluide caloporteur à l'état liquide en circuit fermé entre une source chaude et une source froide afin d'échanger des calories entre les deux sources, cette circulation étant réalisée de façon autonome, indépendante de toute source d'énergie autre que l'énergie thermodynamique due à la différence de température entre les deux sources, même si cet écart de température est relativement faible et si les deux sources sont éloignées l'une de l'autre.

Un procédé selon l'invention sert à faire circuler un fluide caloporteur dans un circuit fermé, à volume constant qui comporte, de façon connue, une source chaude, une source froide, un premier réservoir clos qui est situé à un niveau supérieur ou égal à celui de la source chaude et qui communique avec ladite source chaude et un deuxième réservoir clos qui est situé à un niveau au moins égal à celui du premier réservoir, lesquels réservoirs contiennent un mélange de phases liquide et vapeur dudit fluide, les parties supérieures desdits réservoirs étant reliées entre elles par une canalisation munie d'une vanne et la partie inférieure du premier réservoir étant reliée au deuxième réservoir par un circuit traversant ladite source froide, lequel procédé comporte de façon connue les étapes suivantes:

– lorsque le liquide dans le premier réservoir atteint un niveau haut, on ferme ladite vanne, le liquide du premier réservoir est chauffé par la source chaude, la pression croît dans le premier réservoir, le liquide est chassé vers le deuxième réservoir et on accumule de l'énergie mécanique,

– et lorsque le liquide dans le premier réservoir atteint un niveau bas, on ouvre ladite vanne, les pressions dans les deux réservoirs s'égalisent et le liquide s'écoule par gravité du deuxième réservoir vers le premier et de nouveaux cycles recommencent.

L'objectif de l'invention est atteint par un procédé qui comporte les étapes suivantes:

– lorsque la pression croît dans le premier réservoir le liquide chaud, qui est chassé de celui-ci, passe dans le deuxième réservoir en restant constamment à l'état liquide et lorsque les pressions dans les deux réservoirs sont égales, le liquide revient du deuxième réservoir dans le premier en traversant la source chaude à l'état liquide.

Un dispositif selon l'invention se différencie des dispositifs du même type connus par le fait qu'il comporte deux capteurs de niveau de l'interface liquide-vapeur dans l'un des deux réservoirs qui commandent respectivement les ouvertures et les fermetures de la vanne qui est placée sur la liaison entre les parties supérieures des deux réservoirs et le premier réservoir communique directement avec la partie supérieure de la source chaude et le dispositif comporte un circuit qui relie la partie inférieure du deuxième réservoir au premier réservoir en passant à travers ladite source chaude.

L'invention a pour résultat de nouvelles pompes thermiques autonomes permettant de faire circuler un fluide caloporteur dans un circuit fermé à volume constant, donc sans fournir aucun travail à l'extérieur. Une pompe selon l'invention permet d'échanger des calories entre une source chaude et une source froide en utilisant uniquement l'énergie due aux différences de température des deux sources. Pendant la première phase de chaque cycle, le liquide caloporteur circule d'un premier réservoir relié à la source chaude vers un deuxième réservoir relié à la source froide sous l'effet de la différence de pression entre les deux sources et il accumule de l'énergie mécanique, potentielle ou cinétique. Pendant la deuxième phase de chaque cycle, le liquide retourne du deuxième réservoir vers le premier sous l'effet de l'énergie mécanique accumulée pendant la première phase.

Les dispositifs selon l'invention étant autonomes peuvent fonctionner dans des sites isolés, sans aucun apport d'énergie mécanique ou électrique. Les pompes thermiques selon l'invention conviennent spécialement comme pompes de circulation pour équiper des installations de chauffage d'eau par des capteurs solaires. Les pompes de circulation selon l'invention sont auto-régulatrices du fait que le débit de fluide caloporteur varie dans le même sens que la différence de température entre le capteur solaire et le réservoir d'accumulation d'eau chaude.

Les installations de captage d'énergie solaire comportant un circulateur selon l'invention sont très simples et très robustes du fait qu'elles ne comportent aucune pièce en mouvement autre que des clapets et une vanne qui peut être une vanne à flotteur, très simple. Les pompes de circulation selon l'invention sont faciles à entretenir par du personnel peu spécialisé et elles peuvent fonctionner très longtemps sans surveillance et sans entretien.

La description suivante se réfère aux dessins annexés qui représentent, sans aucun caractère limitatif, des exemples de réalisation de dispositifs et de circuits construits selon la présente invention.

– La figure 1 est un schéma général d'une pompe thermique selon l'invention.

– La figure 2 est un schéma général d'une variante de réalisation d'une pompe thermique selon l'invention.

– La figure 3 est un schéma général d'un autre mode de réalisation d'une pompe thermique selon l'invention.

– La figure 4 est un schéma général d'un dispositif selon l'invention comportant deux sources chaudes en parallèle.

– La figure 5 est un schéma d'une application d'une pompe selon l'invention comme pompe de circulation d'un fluide caloporteur dans une installation comportant un capteur solaire et un réservoir d'eau chaude.

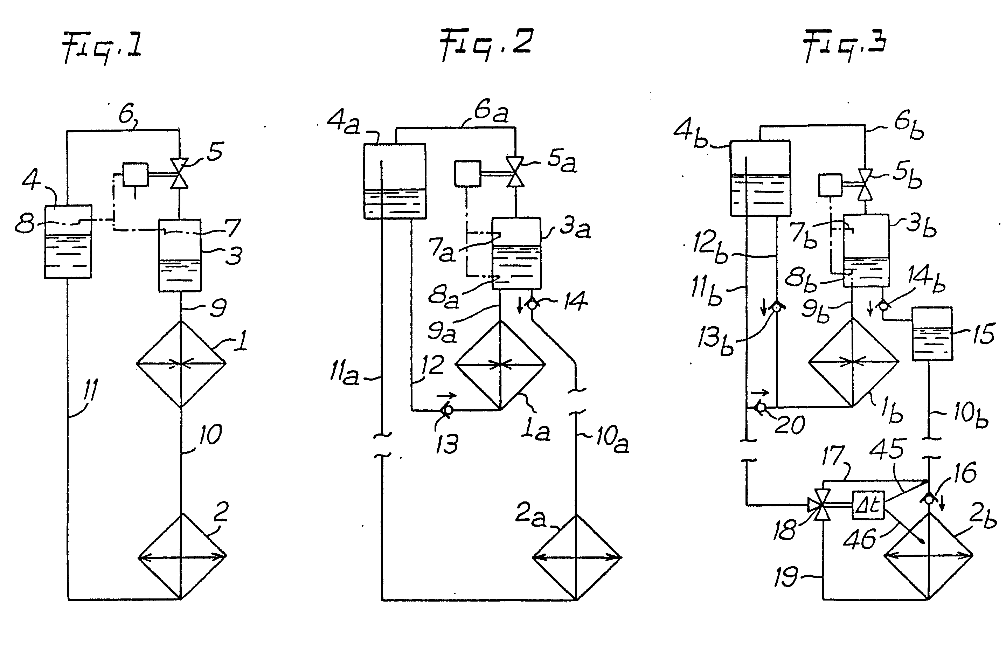

La pompe thermique représentée par la figure 1 comporte une source chaude 1 et une source froide 2. Elle comporte également une première chambre ou réservoir clos 3, situé au-dessus et à proximité de la source chaude, et une deuxième chambre ou réservoir clos 4 qui est situé à une altitude supérieure ou égale à celle du réservoir 3. Ces deux chambres 3 et 4 contiennent un liquide en équilibre de phase avec la vapeur.

Les parties supérieures des deux chambres 3 et 4 qui contiennent les phases vapeur communiquent entre elles à travers une canalisation 6 qui comporte une vanne automatique 5 dont les ouvertures et fermetures sont commandées automatiquement par deux capteurs de niveau 7 et 8, du niveau haut et bas de l'interface liquide vapeur dans l'une ou l'autre des deux chambres 3 ou 4.

Un circuit constitué des portions 9, 10 et 11 relie entre elles les parties inférieures des deux chambres 3 et 4 en passant par la source chaude 1 et par la source froide 2. Les réservoirs 3 et 4, reliés entre eux par les canalisations 6, 9, 10, 11 forment un circuit fermé à volume constant qui contient une quantité de fluide constante qui se trouve à l'état liquide et gazeux.

Le fonctionnement de la pompe selon la figure 1 est le suivant:

Au début du cycle, la vanne 5 est fermée et le réservoir 3 contient beaucoup de liquide et peu de vapeur. Le liquide contenu dans le réservoir 3 communique avec la source chaude. Il s'échauffe et la pression de la vapeur croît dans le réservoir 3. A mesure que la pression monte, le liquide contenu dans la chambre 3 est chassé par la pression à travers le conduit 9 et la source froide 2. Il se refroidit en traversant la source froide et il remplit progressivement la chambre 4.

Comme le liquide contenu dans la chambre 4 est à température plus basse, la pression de vapeur dans la chambre 4 est plus faible que dans la chambre 3, et à mesure que le liquide de la chambre 3 s'échauffe, le niveau baisse dans la chambre 3 et monte dans la chambre 4 d'où une circulation du liquide à travers les sources chaude et froide sous l'effet de la différence de pression. La chaleur fournie par la source chaude est cédée en partie à la source froide et transformée en partie en énergie cinétique et potentielle du liquide qui est refoulé à un niveau supérieur.

Lorsque le niveau du liquide atteint un seuil inférieur dans le réservoir 3, ou atteint un seuil supérieur dans le réservoir 4, un capteur de niveau de liquide situé dans l'un ou l'autre des deux réservoirs commande l'ouverture de la vanne 5, ce qui met en communication directe les parties supérieures des deux réservoirs à travers la canalisation 6. Ces deux réservoirs forment alors deux vases communicants et le liquide contenu dans le réservoir 4 s'écoule, par gravité, vers le réservoir 3 à travers la canalisation 11, 10, 9, jusqu'à ce que le niveau de l'interface liquide-vapeur atteigne un seuil inférieur dans le réservoir 4 ou un seuil supérieur dans le réservoir 3 qui est détecté par le capteur de niveau qui commande la fermeture de la vanne 5, et un nouveau cycle recommence.

On remarque sur la figure 1 que la source froide se trouve à un niveau inférieur à celui de la source chaude, ce qui constitue une différence caractéristique par rapport aux circuits dans lesquels un liquide circule par thermosiphon où le liquide chaud monte en allant de la source chaude vers les sources froides. Une autre différence est le fait que la vitesse de déplacement des fluides est relativement grande par rapport aux systèmes à thermosiphon.

Il faut noter que le liquide contenu dans le réservoir 4 s'échauffe à l'ouverture de la vanne 5 par la mise en contact avec la vapeur provenant du réservoir 3, c'est donc un liquide réchauffé qui retourne à la source froide par la canalisation 11.

La distance entre les sources est néanmoins limitée car le volume de chacune des canalisations 10 et 11 doit être inférieur au volume de liquide déplacé afin que du liquide s'échange entre les sources.

La figure 2 représente un autre mode de réalisation d'une pompe thermique selon l'invention qui diffère de la précédente par le fait que l'écoulement du liquide entre la source chaude et la source froide est unidirectionnel et la source chaude est parcourue constamment de bas en haut. Dans le mode de réalisation selon la figure 2, la distance entre les sources chaude et froide n'est pas limitée si le calorifugeage des canalisations est satisfaisant.

Les parties homologues à celles de la figure 1 sont représentées par le même repère suivi de l'indice a. Le réservoir 4a est situé à un niveau supérieur à celui du réservoir 3a.

La différence d'altitude entre les niveaux des liquides dans les deux réservoirs est suffisante pour que la pression statique correspondante permette au liquide de vaincre la résistance du clapet de non retour 13, placé sur le conduit 12 reliant le fond du réservoir supérieur à la source chaude. Le sens du clapet 13 est tel que le liquide issu du réservoir supérieur peut s'écouler uniquement en direction de la source chaude et du réservoir inférieur par les canalisations 12 et 9a. Le conduit 10a relie le fond du réservoir inférieur à la source froide par l'intermédiaire du clapet 14 qui ne permet l'écoulement du liquide que dans le sens du réservoir 3a vers la source froide 2a. Le conduit 11a relie la partie inférieure de la source froide à la partie supérieure du réservoir 4a. Ainsi l'ensemble des conduits 10a, 11a, 12, 9a forme une boucle ne pouvant être parcourue que dans un seul sens par le liquide.

L'un des réservoirs, de préférence le réservoir 3a, comporte deux capteurs de niveau 7a et 8a, le deuxième réservoir 4a a un volume supérieur au premier de manière à pouvoir absorber le volume supplémentaire dû à la dilatation du liquide avec la température sans que le fonctionnement de l'installation soit perturbé.

Le fonctionnement de la machine selon la figure 2 est le suivant:

Au début du cycle, la vanne 5a est fermée et le réservoir 3a est rempli de liquide jusqu'à la hauteur du capteur de niveau haut 7a. Par le fait de la communication avec la source chaude, le liquide s'échauffe et la pression croît dans ce réservoir 3a, ce qui provoque l'expulsion du liquide chaud au travers du clapet 14 et du conduit 10a vers la source froide. Ainsi c'est du liquide ayant la température des parties les plus chaudes de la source la qui atteint la source froide 2a.

Ce liquide, après avoir été refroidi par la traversée de la source froide, progresse dans le conduit 11a et débouche dans la partie supérieure du réservoir 4a où il condense la vapeur. Cette condensation de vapeur crée un effet d'aspiration qui est favorable à l'écoulement du liquide. La vanne 5a s'ouvre automatiquement lorsque le niveau de l'interface liquide-vapeur a atteint le seuil correspondant au capteur de niveau bas 8a. L'égalisation des pressions de vapeur dans les deux réservoirs, consécutive à l'ouverture de la vanne 5a, provoque l'écoulement du liquide du réservoir supérieur vers la source chaude et le réservoir inférieur au travers du conduit 12 et du clapet de non retour 13; lorsque l'interface liquide-vapeur dans le réservoir 3a atteint le niveau du capteur 7a un nouveau cycle commence.

Bien que le liquide circule alternativement du réservoir 3 vers le réservoir 4 et inversement, il circule toujours dans le même sens de la source chaude vers la source froide et il permet donc de transporter des calories de la source chaude à la source froide en utilisant uniquement l'énergie fournie par la différence de température entre les deux sources sans que le circuit ne comporte d'autres pièces mécaniques en mouvement que deux clapets anti-retour et une vanne automatique. Contrairement au dispositif de la figure 1, sur un dispositif conforme à la figure 2, le volume des réservoirs 3 et 4 peut être très inférieur à celui des canalisations et à celui des sources chaude et froide par le fait que la circulation est unidirectionnelle et par le fait que le liquide parcourt la source chaude de bas en haut, le liquide expulsé au travers du clapet 14 est ainsi à température élevée.

La distance entre les deux sources chaude et froide peut être relativement importante car la différence de pression dans les réservoirs 3 et 4 est suffisante pour assurer la circulation du liquide dans un circuit de grande longueur, les seules résistances statiques à vaincre étant celles des clapets et de la différence d'altitude entre les deux réservoirs haut et bas. Le débit dans le conduit 10a reliant la source chaude à la source froide est variable, il dépend de la perte de charge dans les conduits et de la différence entre les pressions dans les réservoirs haut et bas, et par conséquent ce débit est lié à l'écart des températures entre les sources et à la nature du fluide.

Le fluide contenu dans l'installation est choisi en fonction des températures des deux sources afin d'avoir une différence de pression suffisante pour assurer la circulation des fluides. L'eau peut être utilisée pour des températures de source chaude supérieures à 80 °C. Pour des températures inférieures, on peut mélanger à l'eau un fluide plus volatil tel que l'alcool. Le mélange a un point de congélation plus bas que l'eau pure, d'autre part la sécurité est assurée en cas de fuite du circuit primaire et de mélange avec l'eau chaude sanitaire, le mélange d'eau et d'alcool très dilué n'étant généralement pas considéré comme toxique. La gamme des composés chlorofluorés du carbone permet de couvrir le domaine des moyennes et basses températures. Pour un système solaire de chauffage d'eau chaude sanitaire, on peut par exemple utiliser le trichlorotrifluoréthane de formule $CFCl_2\text{-}CF_2Cl$ pur ou dilué dans du white spirit.

La figure 3 représente schématiquement un système d'échange de chaleur entre deux sources comportant deux perfectionnements par rapport à celui de la figure 2: l'écoulement du liquide est ininterrompu dans les conduits de la source froide tant que celle-ci est à une température inférieure à la température de la source chaude. La source froide est isolée lorsque la source chaude se refroidit et devient plus froide que la source froide. L'intérêt de l'écoulement continu est de permettre un meilleur échange thermique au niveau de la source froide.

Dans cette figure 3, les éléments homologues à ceux de la figure 2 sont désignés par le même repère suivi de l'indice b.

Cette figure 3 comporte un troisième réservoir fermé 15, situé au-dessous du réservoir 3b. Un conduit portant le clapet 14b relie la partie supérieure du réservoir 15 au fond du réservoir 3b. Le fond du réservoir 15 est relié à la partie supérieure de la source froide par le conduit 10b au travers du clapet de non retour 16. Un conduit 17 communique avec le conduit 10b et avec une voie d'une vanne à trois voies 18 dont les deux autres voies sont reliées l'une au conduit 11b, l'autre au conduit 19, issu de la partie inférieure de la source froide. Cette vanne 18 a deux états stables; elle relie le conduit 17 au conduit 11b ou bien le conduit 19 au conduit 11b. Le changement d'état de la vanne trois voies est commandé par la différence entre la température de la source froide et la température du liquide dans le conduit 10b.

Le clapet 20 relie le conduit 11b à la partie inférieure de la source chaude.

Le réservoir inférieur 3b comporte les deux capteurs de niveau 7b et 8b, le réservoir supérieur 4b a un volume plus important que les réservoirs 3b et 15 réunis. Il permet également de contenir le surplus de liquide dû à la dilatation du liquide.

Le dispositif permettant un écoulement continu est constitué par les éléments 15 et 20. Le dispositif permettant une régulation des apports thermiques à la source froide est constitué par les éléments 16, 17 et 18. Ces deux dispositifs jouent des rôles indépendants.

Le dispositif permettant la régulation des apports thermiques à la source froide fonctionne de la manière suivante: deux sondes de température 45, 46 comparent la température du liquide venant de la source chaude par le conduit 10b avec la température de la source froide. Si la température de la source froide est la plus basse des deux, la vanne à trois voies 18 met en relation les conduits 19 et 11b et le liquide s'écoule par le clapet 16 au travers de la source froide. Si la température de la source froide est plus élevée que celle du liquide contenu dans le conduit 10b, la vanne à trois voies met en relation le conduit 17 avec le conduit 11b. Le liquide circule ainsi directement du conduit 10b au conduit 11b en évitant la source froide. La partie inférieure de la source froide est isolée par la vanne trois voies 18, la partie supérieure de la source froide est isolée par le clapet 16, de sorte que la source froide est totalement isolée du reste du circuit et ne peut donc pas céder de chaleur au reste de l'installation.

Lorsque la source chaude est à température plus élevée que la source froide, la vanne 18 et le clapet 16 ne modifient pas sensiblement le circuit du liquide dans la source froide, ce circuit devient comparable à celui de la figure 2.

La continuité de l'écoulement est assurée par le réservoir 15 qui contient du liquide et de la vapeur à température élevée provenant de la source chaude.

Au début du cycle, le réservoir 3b est rempli de liquide jusqu'au niveau du capteur de niveau haut 7b, la vanne 5b est fermée, la montée de température, due à la chaleur provenant de la source chaude, provoque une augmentation de pression. Lorsque la pression dans le réservoir 3b devient supérieure à la pression dans le réservoir 15, le clapet 14b s'ouvre et le réservoir 15 se remplit de liquide qui s'écoule ensuite par le conduit 10b et la source froide pour remonter dans le réservoir supérieur par le conduit 11b. Lorsque le niveau dans le réservoir 3b atteint le seuil inférieur correspondant au capteur de niveau 8b, la vanne automatique 5b s'ouvre et la pression dans le réservoir 3b chute, ce qui provoque la fermeture du clapet de non retour 14b. La pression dans le réservoir 15 est alors la plus élevée de l'installation. Le liquide contenu dans les conduits 10b, 19, 11b a acquis de l'énergie cinétique au moment de l'ouverture de la vanne 5b, il continue son mouvement qui est facilité par la surpression interne au réservoir accumulateur 15. Lorsque la vanne 5b est ouverte, la pression est la même des deux côtés du clapet 20, et le liquide peut s'écouler directement du conduit 11b à la source chaude en traversant le clapet de non retour 20. Le liquide peut ainsi remplir rapidement le réservoir 3b en provenant du conduit 12b et du conduit 11b. Lorsque le niveau du liquide dans le réservoir 3b atteint le niveau haut 7b, la vanne 5b se ferme. L'augmentation de pression due à l'élévation de température est initialement renforcée par la pression due à l'énergie cinétique du liquide arrivant par le clapet 20. Le clapet 14b s'ouvre donc plus rapidement que lors du premier cycle. Si la pression dans la source chaude et dans le réservoir 3b est suffisante pour maintenir fermés les clapets 13b et 20, le liquide peut continuer à s'écouler grâce à son énergie cinétique dans le réservoir 4b jusqu'à ce que la vanne 5b s'ouvre.

Le débit du liquide à travers la source froide est donc variable mais toujours dans le même sens. Le rôle du réservoir 15b peut être accompli par la partie de la canalisation se trouvant à la sortie du clapet 14b, si cette canalisation a un volume suffisant à proximité du réservoir 3b.

L'écoulement dans la source chaude est pulsé mais l'échange thermique entre la source chaude et le réservoir 3b est permanent. Lorsque la vanne 5b et les clapets 13b et 20 sont tous trois fermés, la source chaude cède de la chaleur par vaporisation du liquide qui s'élève dans le conduit 9b pour réchauffer le contenu du réservoir 3b, ce qui provoque un échange de chaleur très efficace bien que le liquide soit globalement immobile dans la source chaude.

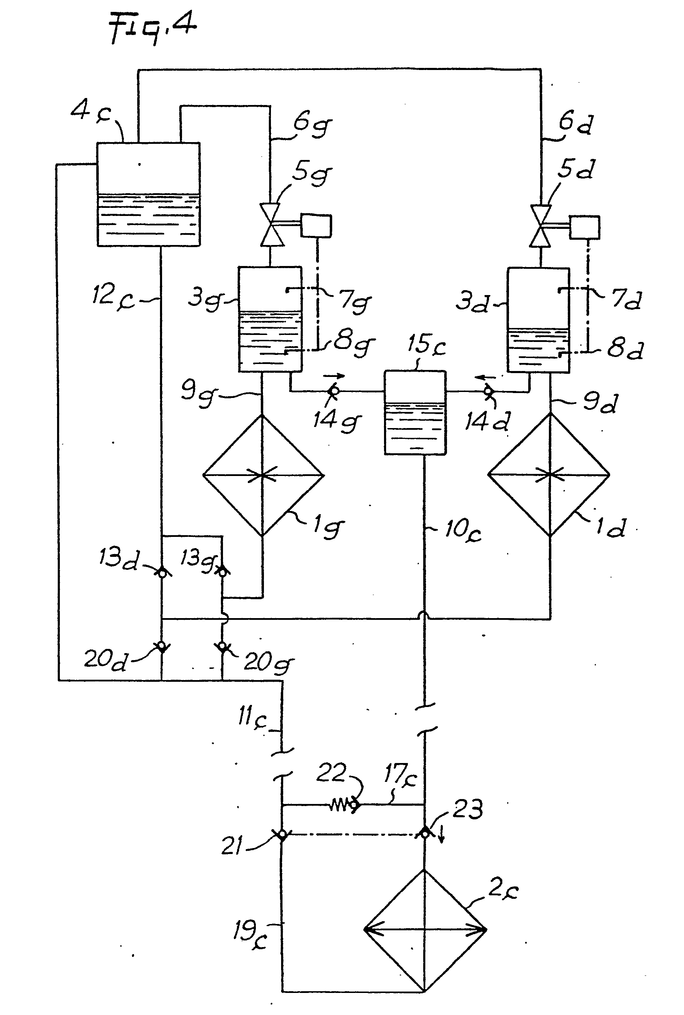

La figure 4 représente schématiquement une installation comportant deux sources chaudes différentes fonctionnant en parallèle avec une source froide unique et une canalisation commune, à deux conduits, reliant les sources chaudes à la source froide. Les sources chaudes ont la possibilité de fournir des calories à des moments différents et à des rythmes différents. Ces sources peuvent être par exemple deux groupes d'insolateurs de surfaces ou d'orientations différentes.

La partie inférieure de la figure 4 représente un dispositif simplifié permettant d'éviter à la source froide les pertes de chaleur lorsque la source chaude n'est plus à une température suffisante. Ce dispositif fonctionne de façon indépendante et peut donc trouver sa place dans les installations décrites dans les figures précédentes. On peut ne pas en tenir compte pour interpréter le fonctionnement des dispositifs de la partie supérieure de la figure 4.

Les éléments homologues associés à chacune des deux sources chaudes sont représentés par le même repère suivi de l'indice d ou g respectivement suivant qu'il s'agit de la première ou de la deuxième source chaude. Les éléments communs sont représentés par un repère suivi de la lettre c, lorsqu'ils ont été déjà présentés dans les figures précédentes.

Chacune des sources chaudes 1g ou 1d est associée à un réservoir inférieur 3g ou 3d comportant une vanne automatique 5g ou 5d, commandée par le niveau du liquide dans chaque réservoir inférieur. Chacun des réservoirs est relié par un clapet 14g ou 14d au réservoir accumulateur 15c.

Chaque réservoir 3g ou 3d n'est mis en communication avec le réservoir accumulateur 15c que lorsque sa pression devient supérieure à celle dudit réservoir accumulateur. Le liquide issu de ce réservoir traverse la source froide 2c et atteint par le conduit 11c la partie supérieure du réservoir supérieur 4c où il condense la vapeur. Lorsque l'une des vannes 5g ou 5d est ouverte, les clapets 13d, 20d ou 13g, 20g, permettent au liquide de pénétrer dans la source chaude correspondant à la vanne qui est ouverte.

La présence de plusieurs sources en parallèle associées à des réservoirs comportant chacun une vanne automatique permet d'assurer un débit continu et régulier du liquide dans les conduits reliant les sources chaudes à la source froide. Si l'une des sources chaudes, par exemple 1g est à basse température, le clapet 14g reste fermé; sous l'effet de la dépression due à cette température, le réservoir 3g se remplit de liquide, la vanne 5g est donc fermée; les clapets 13g et 20g se ferment lorsque le réservoir 3g est rempli. Ainsi la source 1g et le réservoir 3g sont totalement isolés du reste du circuit tant que la pression dans le réservoir 3g n'atteint pas la pression du réservoir accumulateur 15c.

On vient de voir que lorsqu'une source chaude est à une température plus basse que celle du liquide dans le réservoir accumulateur 15c, cette source chaude se trouvait isolée, ce qui réduit les pertes possibles de la source froide, mais il est néanmoins intéressant de pouvoir isoler cette source froide lorsque la température y devient supérieure à celle du liquide issu du réservoir accumulateur. Dans ce but, on place immédiatement au-dessus de la source froide, un clapet 23 de grande portée. Ce clapet commande une vanne ou un clapet de portée plus petite 21, de sorte que le clapet 21 s'ouvre et se ferme en même temps que le clapet 23. Lorsque la source froide est à une température plus élevée que le réservoir accumulateur, la pression dans la source froide y est plus forte, ce qui provoque la fermeture du clapet 23 et par conséquent le clapet 21 est également fermé. La source froide se trouve ainsi isolée du reste du circuit. Un clapet taré 22 permet alors au liquide issu du réservoir accumulateur de rejoindre par les conduits 17c et 11c le réservoir supérieur. Cette circulation permet au liquide des canalisations de monter en température au début du fonctionnement de l'installation. Le clapet 22 est taré de façon qu'il ne laisse pas passer le liquide lorsque les clapets 23 et 21 sont ouverts.

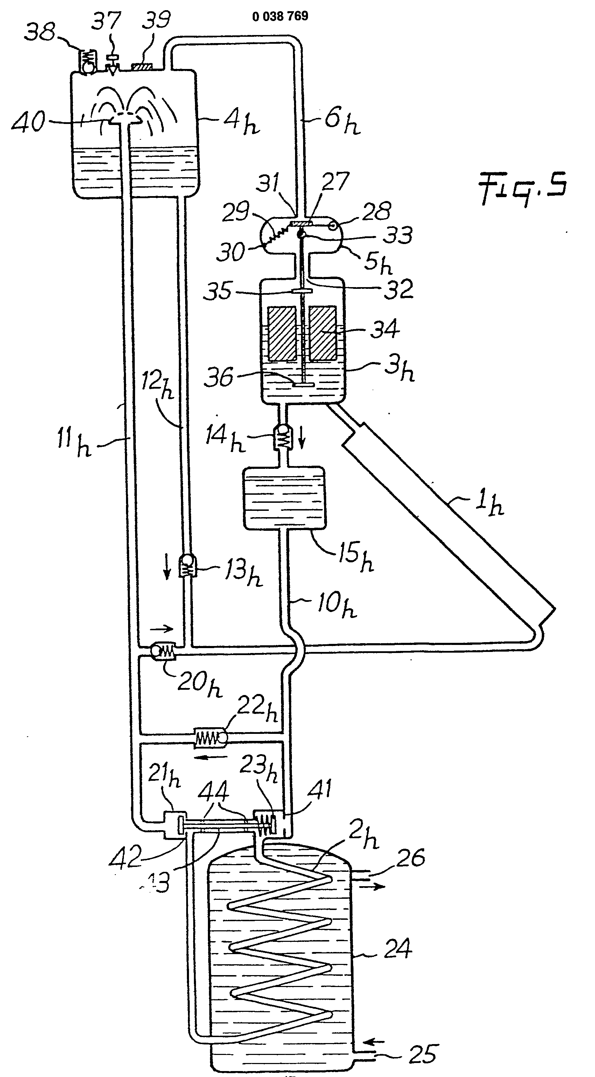

La figure 5 représente schématiquement une application d'une pompe thermique selon l'invention.

Les éléments homologues à ceux des figures précédentes sont représentés par le même repère suivi de la lettre h.

Dans l'application considérée sur cette figure, le transfert de chaleur est assuré entre un capteur solaire 1h, faisant office de source chaude, et un tube échangeur 2h faisant office de source froide, ledit tube échangeur étant noyé dans l'eau contenue dans un ballon 24 qui est par exemple un ballon de préparation d'eau chaude sanitaire.

Le reste de l'installation n'est pas particulier à cette application et peut être utilisé dans la plupart des systèmes de transfert de chaleur à distance.

Un fluide caloporteur en équilibre avec sa vapeur remplit le circuit primaire de l'installation.

Le ballon 24 comporte une entrée d'eau froide 25 à la base et une sortie d'eau réchauffée 26 à la partie supérieure.

Les dimensions relatives des différents éléments de la figure 5 n'ont pas été respectés, en particulier la vanne automatique 5h a été agrandie pour permettre de représenter ses constituants. Cette vanne comporte un clapet 27, articulé autour d'un axe de rotation 28, un ressort 29 est fixé au clapet et à un point d'ancrage 30 de sorte que ce ressort soit légèrement comprimé. Les positions des points d'ancrage du ressort sont telles que le clapet a deux états stables dans sa rotation autour de l'axe 28. Dans l'un de ces états, le clapet obture le siège 31 situé à la partie supérieure; dans l'autre état stable, le clapet est ouvert.

Le clapet 27 est lié à une tige 32 par un axe d'articulation 33, parallèle à l'axe 28, de façon que les mouvements ascendant et descendant de la tige provoquent respectivement l'ouverture et la fermeture du clapet. La tige 32 porte deux butées 35 et 36.

Le réservoir 3h contient un flotteur annulaire 34 pouvant coulisser librement autour de la tige 32 entre les deux butées 35 et 36.

Le fonctionnement est le suivant. Lorsque le niveau du liquide monte dans le réservoir 3h, le flotteur 34 vient s'appuyer contre la butée 35, la poussée d'Archimède sur le flotteur provoque la montée du clapet 27 qui vient s'appliquer sur le siège 31. Après la fermeture du clapet, la poussée exercée par le ressort 30 maintient le clapet fermé, la montée de la pression dans le réservoir 3h est favorable à cette fermeture.

Le niveau du liquide dans le réservoir 3h baisse progressivement à mesure que le liquide est transféré vers le réservoir 4h à travers le réservoir d'accumulation 15h et le serpentin 2h. Lorsque le flotteur 34 atteint la butée 36, il prend appui sur celle-ci et comme le liquide continue à descendre, le poids apparent du flotteur 34 croît et il finit par entraîner vers le bas la tige 32 et le clapet 27. A ce moment, les pressions de vapeur dans les deux réservoirs 3h et 4h s'égalisent et le liquide du réservoir 4h s'écoule par gravité vers le réservoir 3h à travers le clapet 13h, le liquide provenant du réservoir accumulateur 15h et de la source froide pénètre dans la source chaude par l'intermédiaire du clapet 20h; ces écoulements continuent jusqu'à ce que le clapet 27 se referme. La fermeture du clapet 20h contraint à nouveau le liquide, provenant de la source froide, à monter dans la partie supérieure du réservoir 4h. Un dispositif d'aspersion 40, constitué par un conduit perforé, permet à ce liquide de condenser rapidement la vapeur provoquant ainsi un effet d'aspiration et le nouveau cycle continue.

Le ressort 29 permet au clapet d'avoir deux états stables, en particulier lors de l'ouverture, le clapet n'est pas refermé par le passage brusque de la vapeur du réservoir 3h au réservoir 4h.

Le réservoir 4h porte un purgeur manuel 37, une soupape de sécurité 38 et un bouchon de remplissage 39.

Dans le cas où l'installation aurait une microfuite, de l'air peut pénétrer dans les circuits lorsque l'installation se trouve en dépression par la baisse de température de la source chaude. Lorsque la source chaude remonte en température, la pression augmente dans l'ensemble du circuit et l'air contenu dans le circuit peut s'échapper par la soupape 38, lorsque la pression est suffisante; le départ de cet air permet ensuite à l'installation de fonctionner normalement.

Le dispositif de protection contre les pertes de la source est constitué de deux clapets 23h et 21h rendus solidaires dans leurs mouvements de translation par une tige 43 coulissant dans un tube de section étroite comportant des joints 44.

Le siège 41 du clapet 23h a une section plus grande que le siège 42 du clapet 21h, de sorte que l'ensemble des deux clapets est maintenu fermé lorsque le fluide contenu dans le serpentin 2h a une pression supérieure au fluide du reste de l'installation. Le clapet 41 comporte un ressort qui tend à le fermer en l'absence de sollicitation de la part des fluides. Le clapet taré 22h permet une dérivation au liquide lorsque l'ensemble constitué par les clapets 23h et 21h est fermé.

L'installation peut comporter un ou plusieurs voyants de circulation constitués par exemple par des hélices entraînées par le mouvement du liquide (éléments non représentés sur la figure).

Une application intéressante des pompes thermiques selon l'invention concerne les machines frigorifiques à absorption.

De telles machines comportent un circuit primaire de fluide frigorigène en relation avec un bouilleur, un condenseur et un évaporateur, tous trois constitués par des échangeurs thermiques comprenant des circuits secondaires indépendants. Un ou plusieurs de ces circuits secondaires, peuvent être équipés de thermopompes selon l'invention.

Dans le cas où la source chaude est un capteur solaire, la chaleur peut être transférée au bouilleur par un circuit conforme à celui de la figure 2, la source chaude étant constituée par un capteur solaire, (de préférence du type à concentration) et la source froide par le circuit secondaire du bouilleur de la machine à absorption.

Il peut être également intéressant d'extraire les calories du condenseur par une deuxième pompe conforme à l'invention, par un deuxième circuit secondaire séparé, dans lequel la source chaude est constituée par l'échangeur du condenseur et la source froide par un tube à ailettes refroidi par l'air.

Les deux pompes de circulation fonctionnant à des températures différentes, il est intéressant de remplir leurs circuits par des liquides différents, par exemple un mélange d'eau et d'alcool pour la pompe du circuit comportant le bouilleur et le capteur solaire et un carbure chlorofluoré pour le circuit en relation avec le condenseur.

**Revendications**

1. Procédé pour faire circuler un fluide caloporteur dans un circuit fermé, à volume constant, comportant une source chaude (1), une source froide (2), un premier réservoir clos (3) qui est situé à un niveau supérieur ou égal à celui de la source chaude et qui communique avec ladite source chaude et un deuxième réservoir clos (4) qui est situé à un niveau au moins égal à celui du premier réservoir, lesquels réservoirs contiennent un mélange de phases liquide et vapeur dudit fluide, les parties supérieures desdits réservoirs étant reliées entre elles par une canalisation (6) munie d'une vanne (5) et la partie inférieure du premier réservoir étant reliée au deuxième réservoir par un circuit traversant ladite source froide, lequel procédé comporte de façon connue les étapes suivantes:

– lorsque le liquide dans le premier réservoir atteint un niveau haut (7) on ferme ladite vanne (5), le liquide du premier réservoir est chauffé par la source chaude, la pression croît dans le premier réservoir, le liquide est chassé vers le deuxième réservoir et on accumule de l'énergie mécanique,

– et lorsque le liquide dans le premier réservoir atteint un niveau bas, on ouvre ladite vanne (5), les pressions dans les deux réservoirs s'égalisent et le liquide s'écoule par gravité du deuxième réservoir vers le premier et de nouveaux cycles recommencent, caractérisé en ce que lorsque la pression croît dans le premier réservoir le liquide chaud, qui est chassé de celui-ci, passe dans le deuxième réservoir en restant constamment à l'état liquide et lorsque les pressions dans les deux réservoirs sont égales le liquide revient du deuxième réservoir dans le premier en traversant la source chaude à l'état liquide.

2. Dispositif pour faire circuler un fluide caloporteur dans un circuit fermé, à volume constant, comportant au moins une source chaude (1) et au moins une source froide (2), lequel dispositif est du type comportant un premier réservoir clos (3) qui est situé à un niveau supérieur ou égal à celui de la source chaude et qui communique avec la source chaude (1) et un deuxième réservoir clos (4) qui est situé à un niveau au moins égal à celui du premier réservoir, lesquels réservoirs contiennent un mélange de phases liquide et vapeur dudit fluide, et une canalisation (6) qui relie entre elles les parties supérieures du premier et du deuxième réservoir et qui est équipée d'une vanne automatique (5), caractérisé en ce qu'il comporte deux capteurs de niveau haut (7) et bas (8) de l'interface liquide-vapeur dans l'un des deux réservoirs, qui commandent respectivement les ouvertures et les fermetures de ladite vanne, et ledit premier réservoir (3) communique directement avec la partie supérieure de la source chaude (1) et le dispositif comporte un circuit (11, 12, 12b) qui relie la partie inférieure du deuxième réservoir (4) au premier réservoir en passant à travers ladite source chaude (1, 1a, 1b).

3. Dispositif selon la revendication 2 du type comportant un circuit (9, 10, 11) qui relie le premier réservoir en série à la source chaude puis à la source froide et au deuxième réservoir, caractérisé en ce que ledit circuit relie en série le premier réservoir (3) à la partie supérieure de la source chaude (1) et la partie inférieure de la source chaude à la source froide (2) et celle-ci à la partie inférieure du deuxième réservoir (11) de sorte que la phase liquide circule dans ledit circuit en allant du premier réservoir vers le deuxième lorsque ladite vanne est fermée et elle s'écoule par gravité du deuxième réservoir vers le premier lorsque ladite vanne est ouverte.

4. Dispositif selon la revendication 2 du type comportant un deuxième réservoir (4a) qui est situé à un niveau supérieur à celui du premier réservoir (3a) et la partie inférieure du premier réservoir (3a) est reliée au deuxième réservoir (4a) par un circuit (10a, 11a) comportant un premier clapet de non retour (14), caractérisé en ce que ledit circuit (10a, 11a) comporte en outre ladite source froide (2a) et le fond du deuxième réservoir est relié à la partie inférieure de la source chaude (1a) par une canalisation (12) équipée d'un deuxième clapet de non retour (13) et la partie supérieure de la source chaude (1a) est reliée au premier réservoir (3a) par une canalisation (9a), de sorte que, lorsque ladite vanne (5a) est fermée le liquide chaud du premier réservoir s'écoule à travers la source froide par ledit circuit (10a, 11a) et lorsque ladite vanne (5a) est ouverte le liquide du deuxième réservoir (4a) s'écoule par gravité vers le premier réservoir en traversant la source chaude.

5. Dispositif selon la revendication 4, caractérisé en ce que le circuit (10b, 11b) qui relie la partie inférieure du premier réservoir à la source froide (2b) et au deuxième réservoir (4b) comporte un troisième réservoir d'accumulation (15) qui est intercalé entre ledit premier clapet (14b) et la source froide.

6. Dispositif selon l'une quelconque des revendications 2 à 5, caractérisé en ce que ladite vanne automatique (5) est une vanne à flotteur qui comporte un flotteur annulaire (34) qui flotte dans le liquide de l'un des deux réservoirs; un équipage mobile qui est composé d'une tige verticale (32) qui traverse ledit flotteur annulaire et qui porte deux butées (35, 36) placées de part et d'autre dudit flotteur; un clapet (27) qui coopère avec un siège (31), lequel clapet est articulé autour d'un axe (28) et à l'extrémité supérieure (33) de ladite tige (32) et un ressort (29) qui est fixé audit clapet (27) et à un point d'ancrage (30) dont la position est telle que ledit clapet a deux états d'équilibre stable, l'un appliqué contre le siège (31) et l'autre ouvert.

7. Dispositif selon la revendication 5, caractérisé en ce que ledit circuit (10b, 11b) reliant le troisième réservoir (15) à la source froide (2b) comporte une vanne à trois voies (18, intercalée dans ledit circuit et une dérivation (17) qui aboutit à la troisième voie et qui court-circuite la source froide (2b) et le dispositif comporte un capteur de température différentiel (Δt) qui compare la température de la source froide à la température du liquide arrivant à la source froide et qui place automatiquement ladite vanne à trois voies (18) dans la position qui court-circuite ladite source froide (2b) lorsque la température de la source froide est supérieure à la température du liquide arrivant à la source froide.

8. Dispositif selon la revendication 5, caractérisé en ce qu'il comporte deux sources chaudes (1g, 1d) et deux réservoirs inférieurs (3g, 3d) qui sont connectés en parallèle, à travers des clapets (14g, 14d) sur un même troisième réservoir d'accumulation (15c), un réservoir supérieur (4c) dont la partie supérieure est reliée respectivement aux parties supérieures des deux réservoirs inférieurs par des conduits (6g, 6d) équipés chacun d'une vanne automatique (5g, 5d) qui est commandée par deux capteurs de niveau haut et bas (7g, 8g et 7d, 8d) situés dans le réservoir inférieur correspondant et le fond du troisième réservoir est relié au réservoir supérieur par un circuit (10c, 11) qui traverse la source froide (2c).

9. Dispositif selon la revendication 5, caractérisé en ce que ladite source froide est intercalée entre un premier clapet amont (23) et un deuxième clapet aval (21) ayant une surface plus faible, lesquels clapets sont asservis entre eux de telle sorte qu'ils s'ouvrent et se ferment tous deux simultanément et ledit circuit (10c, 19c) passant à travers ledit clapet amont (23), la source froide (2c) et ledit clapet aval (21) comporte un court-circuit (17c) qui est équipé d'un troisième clapet taré (22).

10. Application d'un dispositif selon l'une quelconque des revendications 2 à 9 comme pompe de circulation d'un liquide caloporteur dans un circuit fermé comportant un capteur solaire (1h) comme source chaude et un échangeur (2h) comme source froide, caractérisée en ce que ladite pompe comporte un premier réservoir clos (3h) qui est placé à un niveau supérieur à celui dudit capteur solaire et qui communique avec la partie supérieure dudit capteur solaire et un deuxième réservoir clos (4h) qui est situé à un niveau supérieur à celui du premier réservoir, les parties supérieures des deux réservoirs étant reliées entre elles par une canalisation (6h) et ledit premier réservoir comporte une vanne automatique (27) à flotteur coulissant (34) qui obture l'extrémité de ladite canalisation (6h) et une extrémité dudit échangeur (2h) est reliée à la partie inférieure dudit premier réservoir (3h) à travers un premier clapet de non retour (14h), la deuxième extrémité dudit échangeur (2h) est reliée au deuxième réservoir (4h) et la partie inférieure du deuxième réservoir (4h) est reliée à la partie inférieure dudit capteur solaire (1h) par une canalisation (12h) équipée d'un deuxième clapet de non retour (13h).

11. Dispositif selon la revendication 10, caractérisé en ce que ledit circuit (10h), qui relie l'extrémité inférieure du premier réservoir audit tube échangeur (2h), comporte un troisième réservoir (15h) qui est intercalé entre ledit premier clapet (14h) et ledit tube échangeur et le circuit (11h) qui relie le tube échangeur (2h) au deuxième réservoir, comporte une dérivation équipée d'un troisième clapet (20h) qui relie ledit circuit (11h) à la partie inférieure dudit capteur solaire.

## Claims

1. Process for circulating a heat-conveying fluid in a closed circuit, with constant volume, comprising a hot source (1), a cold source (2), a first closed tank (3) which is situated at a level higher or equal to that of the hot source, and which communicates with said hot source and a second closed tank (4) which is situated at a level at least equal to that of the first tank, said tanks containing a mixture of liquid and vapour phases of said fluid, the upper part of said tanks being interconnected by a piping system (6) equipped with a valve (5) and the lower part of the first tank being connected to the second tank by a circuit traversing said could source, said process comprises in known manner the following steps:

– when the liquid in the first tank reaches a high level (7), said valve (5) is closed, the liquid of the first tank is heated by the hot source, the pressure rises in the first tank, the liquid is expelled towards the second tank and mechanical energy is accumulated,

– and when the liquid in the first tank reaches a low level, said valve (5) is opened, the pressures in the two tanks equalize and the liquid flows by gravity from the second tank towards the first and new cycles start again, characterized in that when the pressure rises in the first tank, the hot liquid, which is expelled therefrom, flows into the second tank in a constantly liquid state and when the pressures in the two tanks are equal, the liquid returns from the second tank into the first by traversing the hot source in liquid state.

2. Device for circulating a heat-conveying fluid in a closed circuit, with constant volume, comprising at least a hot source (1) and at least a cold source (2), said device is of the type comprising a first closed tank (3) which is situated at a level higher or equal to that of the hot source and which communicates with the hot source (1) and a second closed tank (4) which is situated at a level at least equal to that of the first tank, said tanks containing a mixture of liquid and vapour phases of said fluid, and a pipe system interconnecting the upper parts of the first and second tank and which are equipped with an automatic valve (5), characterized in that it comprises two high (7) and low (8) level sensors of the liquid-vapour interface in one of the two tanks, which control respectively the openings and shuttings of said valve, and said first tank (3) directly communicates with the upper part of the hot source (1) and the device comprises a circuit (11, 12, 12b) which connects the lower part of the second tank (4) to the first tank by traversing said hot source (1, 1a, 1b).

3. Device according to claim 2 of the type comprising a circuit (9, 10, 11) connecting in series the first tank to the hot source then to the cold source and to the second tank, characterized in that said circuit connects in series the first tank (3) to the upper part of the hot source (1) and the lower part of the hot source to the cold source (2), and the latter to the lower part of the second tank (11) so that the liquid phase circulates in said circuit from the first tank towards the second one, when said valve is closed, and it flows by gravity from the second tank towards the first when said valve is open.

4. Device according to claim 2, of the type comprising a second tank (4a) which is situated at a level higher than that of the first tank (3a) and the lower part of the first tank (3a) is connected to the second tank (4a) by a circuit (10a, 11a) comprising a first non-return valve (14), characterized in that said circuit (10a, 11a) further comprises said cold source (2a) and the bottom of the second tank is connected to the lower part of the hot source (1a) by a pipe system (12) equipped with a second non-return valve (13) and the upper part of the hot source (1a) is connected to the first tank (3a) by a pipe system (9a), so that, when said valve (5a) is shut the hot liquid of the first tank flows through the cold source by said circuit (10a, 11a) and when said valve (5a) is open the liquid of the second tank (4a) flows by gravity towards the first tank by traversing the hot source.

5. Device according to claim 4, characterized in that the circuit (10b, 11b) which connects the lower part of the first tank to the cold source (2b) and to the second tank (4b) comprises a third storage tank (15) which is inserted between said first valve (14b) and the cold source.

6. Device according to any one of claims 2 to 5, characterized in that said automatic valve (5) is a float valve which comprises an annular float (34) which floats in the liquid of one of the two tanks; a movable equipment which is constituted by a vertical rod (32) which traverses said annular float and which carries two thrust members (35, 36) placed on both sides of said float; a valve (27) which cooperates with a seat (31), said valve is mounted for rotating about an axis (28) and at the upper end (33) of said rod (32), and a spring (29) which is fixed to said valve (27) and to an anchoring point (30) whose position is such that said valve has two stable balancing states, one being applied against the seat (31) and the other being opened.

7. Device according to claim 5, characterized in that said circuit (10b, 11b) connecting the third tank (15) to the cold source (2b) comprises a three-way valve (18) inserted in said circuit and a by-pass (17) which reaches the third way and which by-passes the cold source (2b) and the device comprises a differential temperature sensor (Δt) which compares the temperature of the cold source with the temperature of the liquid reaching the cold source, and which automatically places said three-way valve (18) in the position which short-circuits said cold source (2b) when the temperature of the cold source is higher than the temperature of the liquid reaching the cold source.

8. Device according to claim 5, characterized in that it comprises two hot sources (1g, 1d) and two lower tanks (3g, 3d) which are connected in parallel, through valves (14g, 14d) on a same third storage tank (15c), an upper tank (4c) whose upper part is connected respectively to the upper parts of the two lower tanks via conduits (6g, 6d) each being equipped with an automatic valve (5g, 5d) which is controlled by two high and low level sensors (7g, 8g and 7d, 8d) situated in the corresponding lower tank and the bottom of the third tank is connected to the upper tank by a circuit (10c, 11) which traverses the cold source (2c).

9. Device according to claim 5, characterized in that said cold source is inserted between a first upstream valve (23) and a second downstream valve (21) with a smaller surface, said valves being in mutual control relation, so that both simultaneously open and close, and said circuit (10c, 19c) traversing said upstream valve (23), the cold source (2c) and said downstream valve (21) comprise a by-pass (17c) which is equipped with a third calibrated valve (22).

10. Application of a device according to any one of claims 2 to 9, as circulation pump for a heatconveying liquid in a closed circuit comprising a solar collector (1h) as source of heat and an exchanger (2h) as cold source, characterized in that said pump comprises a first closed tank (3h) which is placed at a level higher than that of said solar collector and which communicates with the upper part of said solar collector, and a second closed tank (4h) which is situated at a level higher than that of the first tank, the upper parts of the two tanks being interconnected by a pipe system (6h) and said first tank comprises an automatic valve (27) with a sliding float (34) which closes off the end of said pipe system (6h) and an end of said exchanger (2h) is connected to the lower part of said first tank (3h) through a first non-return valve (14h), the second end of said exchanger (2h) is connected to the second tank (4h) and the lower part of the second tank (4h) is connected to the lower part of said solar collector (1h) by a pipe system (12h) equipped with a second non-return valve (13h).

11. Device according to claim 10, characterized in that said circuit (10h), which connects the lower end of the first tank to said exchanging tube (2h), comprises a third tank (15h) which is inserted between said first valve (14h) and said exchanging tube and the circuit (11h) which connects the exchanging tube (2h) to the second tank, comprises a branch pipe equipped with a third valve (20h) which connects said circuit (11h) to the lower part of said solar collector.

**Patentansprüche**

1. Verfahren zum Umwälzen eines Wärmeaustauschmediums in einem geschlossenen Kreislauf mit konstantem Volumen, umfassend eine heisse Quelle (1), eine kalte Quelle (2), einen in gleicher Höhe mit der heissen Quelle oder darüber angeordneten und mit der heissen Quelle kommunizierenden ersten geschlossenen Behälter (3) und einen in zumindest gleicher Höhe mit dem ersten Behälter angeordneten zweiten geschlossenen Behälter (4), welche Behälter eine flüssige Phasenmischung und Dampf des Mediums enthalten, wobei die Oberteile der Behälter durch eine mit einem Ventil (5) versehene Rohrleitung (6) miteinander verbunden sind und der Unterteil des ersten Behälters durch einen die kalte Quelle durchquerenden Kreislauf mit dem zweiten Behälter verbunden ist, welches Verfahren auf bekannte Weise folgende Schritte umfasst:

– wenn die Flüssigkeit im ersten Behälter ein hohes Niveau (7) erreicht, wird das Ventil (5) geschlossen, die Flüssigkeit des ersten Behälters wird durch die heisse Quelle erhitzt, der Druck wächst im ersten Behälter, die Flüssigkeit wird zum zweiten Behälter gedrängt, und man speichert mechanische Energie,

– und wenn die Flüssigkeit im ersten Behälter ein niedriges Niveau erreicht, wird das Ventil (5) geöffnet, die Drücke in den beiden Behältern gleichen sich aus, und die Flüssigkeit fliesst aufgrund der Schwerkraft aus dem zweiten Behälter zum ersten, und neue Zyklen beginnen, dadurch gekennzeichnet, dass bei Anwachsen des Drucks im ersten Behälter die heisse Flüssigkeit, die aus demselben gedrängt wird, in den zweiten Behälter gelangt und dabei ständig in flüssigem Zustand bleibt und, wenn die Drücke in den beiden Behältern gleich sind, die Flüssigkeit aus dem zweiten Behälter unter Durchqueren der heissen Quelle in flüssigem Zustand in den ersten Behälter zurückkehrt.

2. Vorrichtung zum Umwälzen eines Wärmeaustauschmediums in einem geschlossenen Kreislauf mit konstantem Volumen, umfassend mindestens eine heisse Quelle (1) und mindestens eine kalte Quelle (2), welche Vorrichtung einen ersten, in gleicher Höhe mit der heissen Quelle oder darüber angeordneten und mit der heissen Quelle (1) kommunizierenden geschlossenen Behälter (3) und einen zweiten in zumindest gleicher Höhe mit dem ersten Behälter angeordneten geschlossenen Behälter (4), welche Behälter eine flüssige Phasenmischung und Dampf des Mediums enthalten, und eine die Oberteile des ersten und zweiten Behälters verbindende und mit einem automatischen Ventil (5) ausgestattete Rohrleitung umfasst, dadurch gekennzeichnet, dass sie zwei Messfühler für hohes (7) und niederes (8) Niveau der Grenzfläche Flüssigkeit-Dampf in einem der beiden Behälter umfasst, die das Öffnen bzw. das Schliessen des Ventils steuern, und der erste Behälter (3) direkt mit dem oberen Teil der heissen Quelle (1) in Verbindung steht, und die Vorrichtung einen Kreislauf (11, 12, 12b) umfasst, der den Unterteil des zweiten Behälters (4) unter Durchqueren der heissen Quelle (1, 1a, 1b) mit dem ersten Behälter (4) verbindet.

3. Vorrichtung nach Anspruch 2 mit einem Kreislauf (9, 10, 11), der den ersten Behälter mit der heissen Quelle und danach mit der kalten und mit dem zweiten Behälter in Serie schaltet, dadurch gekennzeichnet, dass der Kreislauf den ersten Behälter (3) mit dem oberen Teil der heissen Quelle (1) und den unteren Teil der heissen Quelle mit der kalten Quelle (2) und diese mit dem Unterteil des zweiten Behälters (11) derart in Serie schaltet, dass die flüssige Phase in dem Kreislauf zirkuliert, indem sie aus dem ersten Behälter zum zweiten wandert, wenn das Ventil geschlossen ist, und aufgrund der Schwerkraft aus dem zweiten Behälter zum ersten fliesst, wenn das Ventil geöffnet ist.

4. Vorrichtung nach Anspruch 2 mit einem zweiten Behälter (4a), der in einer Höhe über dem ersten Behälter (3a) angeordnet ist, und bei welcher der Unterteil des ersten Behälters (3a) durch einen eine erste Rückschlagklappe (14) enthaltenden Kreislauf (10a, 11a) mit dem zweiten Behälter (4a) verbunden ist, dadurch gekennzeichnet, dass der Kreislauf (10a, 11a) weiters die kalte Quelle (2a) umfasst, und der Boden des zweiten Behälters durch eine mit einer zweiten Rückflussklappe (13) ausgestatteten Rohrleitung (12) mit dem unteren Teil der heissen Quelle (1a) verbunden ist, und der obere Teil der heissen Quelle (1a) durch eine Rohrleitung (9a) mit dem ersten Behälter (3a) derart verbunden ist, dass die heisse Flüssigkeit bei geschlossenem Ventil (5a) aus dem ersten Behälter über den Kreislauf (10a, 11a) durch die kalte Quelle fliesst und die Flüssigkeit bei geöffnetem Ventil (5a) aufgrund der Schwerkraft aus dem zweiten Behälter (4a) unter Durchqueren der heissen Quelle zum ersten Behälter fliesst.

5. Vorrichtung nach Anspruch 4, dadurch gekennzeichnet, dass der den Unterteil des ersten Behälters mit der kalten Quelle (2b) und mit dem zweiten Behälter (4b) verbindende Kreislauf (10b, 11b) einen dritten Behälter (15) zur Speicherung umfasst, der zwischen der ersten Klappe (14b) und der kalten Quelle zwischengeschaltet ist.

6. Vorrichtung nach einem der Ansprüche 2 bis 5, dadurch gekennzeichnet, dass das automatische Ventil (5) ein Schwimmerventil ist, das einen in der Flüssigkeit eines der beiden Behälter schwimmenden ringförmigen Schwimmer (34) umfasst; dass ein bewegliches Organ, bestehend aus einer vertikalen, den ringförmigen Schwimmer durchsetzenden und zwei zu beiden Seiten des Schwimmers angeordnete Anschläge (35, 36) tragenden Stange (32); ein mit einem Sitz (31) zusammenwirkendes Klappenventil (27), welches am oberen Ende (33) der Stange (32) um eine Achse (28) beweglich befestigt ist, und eine Feder (29), die am Klappenventil (27) und an einem Verankerungspunkt (30) befestigt ist, dessen Position derart ist, dass das Klappenventil zwei Stellungen stabilen Gleichgewichts hat, nämlich eine am Sitz (31) anliegende und eine offene, vorgesehen sind.

7. Vorrichtung nach Anspruch 5, dadurch gekennzeichnet, dass der den dritten Behälter (15) mit der kalten Quelle (2b) verbindende Kreislauf (10b, 11b) ein Dreiwegventil (18), das in den Kreislauf geschaltet ist, und eine Abzweigungsleitung (17) umfasst, die an den dritten Weg anschliesst und die kalte Quelle (2b) kurzschliesst, und dass die Vorrichtung einen Messfühler für die Temperaturdifferenz ($\Delta t$) umfasst, welcher die Temperatur der kalten Quelle mit der Temperatur der zur kalten Quelle kommenden Flüssigkeit vergleicht und das Dreiwegventil (18) automatisch in die die kalte Quelle (2b) kurzschliessende Position bringt, wenn die Temperatur der kalten Quelle über der Temperatur der zur kalten Quelle kommenden Flüssigkeit liegt.

8. Vorrichtung nach Anspruch 5, dadurch gekennzeichnet, dass sie zwei heisse Quellen (1g, 1d) und zwei untere Behälter (3g, 3d) umfasst, die durch Klappenventile (14g, 14d) an einen dritten Behälter (15c) zur Speicherung parallel geschaltet sind, einen oberen Behälter (4c), dessen Oberteil mit den Oberteilen der beiden unteren Behälter über Leitungen (6g bzw. 6d) verbunden ist, welche Leitungen jeweils mit einem automatischen Ventil (5g, 5d) versehen sind, welches durch zwei im entsprechenden unteren Behälter befindliche Messfühler (7g, 8g und 7d, 8d) für hohes und niederes Niveau gesteuert ist, und dass der Boden des dritten Behälters durch einen durch die kalte Quelle (2c) gehenden Kreislauf (10c, 11) mit dem oberen Behälter verbunden ist.

9. Vorrichtung nach Anspruch 5, dadurch gekennzeichnet, dass die kalte Quelle zwischen einem ersten Klappenventil (23) in Stromaufwärtsrichtung und einem zweiten Klappenventil (21) in Stromabwärtsrichtung von geringerer Oberfläche zwischengeschaltet ist, welche Klappenventile untereinander derart gesteuert sind, dass sie sich beide gleichzeitig öffnen und schliessen, und dass der durch das Klappenventil (23) in Stromaufwärtsrichtung, die kalte Quelle (2c) und das Klappenventil (21) in Stromabwärtsrichtung gehende Kreislauf (10c, 19c) einen mit einem dritten Ausgleichs-Klappenventil (22) versehenen Kurzschluss-Kreislauf (17c) umfasst.

10. Anwendung einer Vorrichtung nach einem der Ansprüche 2 bis 9 als Umwälzpumpe für eine Wärmeaustauschflüssigkeit in einem geschlossenen Kreislauf mit einem Sonnenkollektor (1h) als heisse Quelle und einem Austauscher (2h) als kalte Quelle, dadurch gekennzeichnet, dass die Pumpe einen ersten geschlossenen, in einer Höhe über dem Sonnenkollektor angeordneten und mit dem Oberteil des Sonnenkollektors kommunizierenden Behälter (3h) und einen zweiten geschlossenen, in einer Höhe über jener des ersten Behälters angeordneten Behälter (4h) umfasst, wobei die Oberteile der beiden Behälter durch eine Rohrleitung (6h) miteinander verbunden sind, und der erste Behälter ein automatisches Ventil (27) mit einem verschiebbaren Schwimmer (34) aufweist, welches das Ende der Rohrleitung (6h) verschliesst, und ein Ende des Austauschers (2h) über eine erste Rückschlagklappe (14h) mit dem Unterteil des ersten Behälters (3h) verbunden ist, das zweite Ende des Austauschers (2h) mit dem zweiten Behälter (4h) verbunden ist und der Unterteil des zweiten Behälters (4h) durch eine mit einer zweiten Rückschlagklappe (13h) versehene Rohrleitung (12h) mit dem Unterteil des Sonnenkollektors (1h) verbunden ist.

11. Vorrichtung nach Anspruch 10, dadurch gekennzeichnet, dass der das untere Ende des ersten Behälters mit dem Austauscherrohr (2h) verbindende Kreislauf (10h) einen dritten Behälter (15h) umfasst, welcher zwischen dem ersten Klappenventil (14h) und dem Austauscherrohr zwischengeschaltet ist, und der das Austauscherrohr (2h) mit dem zweiten Behälter verbindende Kreislauf (11h) eine mit einem dritten Klappenventil (20h) versehene, den Kreislauf (11h) mit dem Unterteil des Sonnenkollektors verbindende Abzweigung umfasst.

Fig.1

Fig.2

Fig.3

0 038 769

Fig.4

Fig.5

0 038 769